# EUROPEAN PATENT SPECIFICATION

(11) **EP 4 242 189 B1**
(45) Date of publication and mention of the grant of the patent: **12.02.2025**
(21) Application number: 22305285.3
(22) Date of filing: 11.03.2022
(51) Int. Cl.: C04B 28/14, C04B 40/00

(54) **REACTIVE BINDER MIXTURE FOR CEMENTITIOUS ARTICLE**
REAKTIVE BINDEMITTELMISCHUNG FÜR ZEMENTARTIGE GEGENSTÄNDE
MÉLANGE DE LIAISON RÉACTIVE POUR ARTICLE DE CIMENT

(43) Date of publication of application: 13.09.2023
(73) Proprietor: SAINT-GOBAIN PLACO, 92400 Courbevoie (FR)
(72) Inventor: NAIDU, Sonia, 93300 Aubervilliers (FR); NICOLEAU, Luc, 92400 COURBEVOIE (FR)
(74) Representative: Saint-Gobain Recherche

(56) References cited:
- EP-A1- 1 081 113
- WO-A1-02/42064
- WO-A2-2009/006048
- DE-B3- 102009 024 200
- FR-A1- 3 053 040
- US-A1- 2016 137 551
- KOVLER K: "Setting and Hardening of Gypsum-Portland Cement-Silica Fume Blends, Part 1: Temperature and Setting Expansion", vol. 28, no. 3, 1 January 1998 (1998-01-01), pages 423 - 437, XP009539011, ISSN: 0008-8846, Retrieved from the Internet <URL:https://api.elsevier.com/content/article/PII:S0008884698000052?httpAccept=text/plain> DOI: 10.1016/S0008-8846(98)00005-2
- WANG YINGBIN ET AL: "Effect of silica fume on the thaumasite form of sulfate attack on cement-based materials", WUHAN UNIVERSITY OF TECHNOLOGY. JOURNAL (MATERIAL SCIENCE EDITION), WUHAN LIGONG DAXUE,WUHAN UNIVERSITY OF TECHNOLOGY, CN, vol. 32, no. 5, 7 October 2017 (2017-10-07), pages 1108 - 1114, XP036334028, ISSN: 1000-2413, [retrieved on 20171007], DOI: 10.1007/S11595-017-1718-3

## Description

The invention relates to a reactive binder mixture for manufacturing cementitious articles, in particular cementitious board.

The manufacturing process of cementitious articles such as boards includes a step during which a cementitious preparation sets, thus forming the cementitious article. The setting time may vary depending on the components of the cementitious preparation or the chosen manufacturing process. For instance, continuous processes for manufacturing cementitious boards include continuously spreading the cementitious preparation on a conveyor carrying a lower sheeting, this sheeting and the cementitious preparation then being shaped by an extruder and cut into boards of desired dimensions before being cured. Continuous processes may require a precise setting time, usually a few minutes, which is faster than conventional processes during which the cementitious preparation is poured into moulds to set.

It is known that plaster, also known as calcium sulphate hemihydrate, may be combined with cement to decrease the setting time of cementitious preparations. Also, the carbon dioxide footprint of cementitious articles can be reduced when cement is at least partially replaced with calcium sulfate hemihydrate, since plaster requires less energy and produces less CO₂ during its manufacturing. Several attempts have thus been made to provide cementitious compositions comprising calcium sulphate hemihydrate. Such compositions are particularly suitable for continuous processes for manufacturing cementitious articles such as boards.

Known from FR 3 053 040 A1 is a hydraulic binder mixture made up of 31,5 g slag, 15 g CSA clinker, 9 g calcium sulphate hemihydrate, 1,8 g sodium silicate, 0,9 g CaOH, 1,8 g NaTPP, which is dry mixed with 40 g sand and 1,1 g expanded polystyrene balls before combined with 24,6 ml of water incl. 2 g of superplasticizer. The hydraulic binder mixture itself comprises 52,5 wt% slag, 25 wt% CSA clinker, 15 wt% hemihydrate, 3 wt% silicate, 1,5 wt% slaked lime, 3 wt% NaTPP. The slag is a source of silica, alumina and alkaline earth oxides. Boards are made of the wet mixture.

Known from EP 1 081 113 A1 discloses a binder composition as follows: 28 wt% PC type III, 60 wt% hemihydrate, 10 wt% pozzolan and 2 wt% Ca(OH)2, whereas the pozzolan may be either silica fume, or two different kinds of metakaolin. Boards are made of the wet mixture further including sintered shale as aggregate, water and superplasticizer.

Kovler, K in "Setting and Hardening of Gypsum-Portland Cement-Silica Fume Blends, Part 1: Temperature and Setting Expansion", (CEMENT AND CONCRETE RESEARCH, PERGAMON PRESS, ELMSFORD, NY, US, vol. 28, no. 3, 1 January 1998, pages 423-437, XP009539011) discloses a blend of 20 wt% PC type I, 75 wt% calcium sulfate hemihydrate and 5 wt% silica fume. This composition was found to prevent the formation of ettringite and thaumasite.

DE 10 2009 024200 B3 likewise strives to avoid thaumasite formation by means of a binder free of calcium sulfate, CaO and Ca(OH)2 and comprising: <= 5 wt% OPC, 20-100 wt% slag OR 10-80 wt% fly ash of class C or class F or 10-80 wt% silica dust and an alkaline activator being a carbonate, hydroxide, silicate or silicate hydrate.

Reactions between the formed gypsum, also known as calcium sulphate dihydrate, and cement can however result, under humid conditions, in the formation of thaumasite crystals, which can deeply affect the stability and durability of the articles. The precipitation of thaumasite in the pores can result in crystallisation pressure that causes swelling of the binder and it consumes in parallel calcium silicate hydrates. Both result in the articles losing their mechanical performances. In particular, the swelling can be very damaging for boards in wall systems since it leads to internal stresses, cracking and further ingress zones. There is thus a need for such cementitious articles, in particular constructions boards, to be more durable and dimensionally stable when applied in external applications and especially in wet and cold environments.

The use of pozzolanic materials, such as silica fume, is known to mitigate the formation of thaumasite in gypsum-cement composition. The present invention is based on the finding that the stability of cementitious articles comprising calcium sulphate hemihydrate, in particular under wet conditions, can be enhanced by the addition of an alkali silicate material.

The present invention fits into this context by providing a reactive binder mixture for manufacturing a cementitious composition resulting in cementitious articles which are significantly less prone to precipitation of thaumasite and swelling and thus more durable in wet conditions, thanks to the addition of a silica source material comprising alkali silicate material.

In this context, the present invention refers toa reactive binder mixture comprising, based on the total dry matter, 10 to 40 wt.% hydraulic cement, 40 to 80 wt.% calcium sulphate hemihydrate, and 1 to 35 wt.% silica source material, wherein the silica source material comprises an alkali silicate material. A second object of the present invention refers to a cementitious composition comprising the reactive binder mixture of the invention. A third object of the present invention refers to a cementitious article, in particular a cementitious board, obtained from the curing of the cementitious composition of the invention.

The alkali silicate material is preferably selected from sodium silicates, potassium silicates, lithium silicates, caesium silicates or mixtures thereof, more preferably from sodium or potassium silicates.

As an option of the invention, the alkali silicate material has a modulus equal to or higher than 1. The term "modulus" refers to the silica modulus of the alkali silicate material, which corresponds to the molar ratio SiO₂/M₂O, with M being an alkaline element such as sodium or potassium. A modulus higher than 2.5, preferably higher than 3, is advantageous for workability of the cementitious composition.

As another option of the invention, the alkali silicate material comprises, based on dry matter, at least 50 wt.%, preferably at least 60 wt.%, more preferably at least 75 wt.%, of alkali silicates.

According to an optional characteristic of the invention, the alkali silicate material has a median particle size D₅₀ of 1 to 500 µm, preferably 10 to 300 µm, more preferably 20 to 200 µm. This can be measured by laser diffraction. D₅₀ is the corresponding particle size when the cumulative percentage reaches 50%, i.e. the portions of particles with diameters smaller and larger than this value are 50%.

The reactive binder mixture according to the present invention comprises relatively low contents of hydraulic cement compared to calcium sulphate hemihydrate. Despite this relative low content, the cementitious article manufactured with this reactive binder mixture have similar, if not improved, water resistance. The water resistance is defined here as the capability to maintain the mechanical properties in wet environment at the same level as in dry conditions. Typically for boards, it can be assessed as set out in EN12467.

The hydraulic cement may be any type of cement: CEM I, II, III, IV or V, as defined in EN 197-1:2000. Preferably, the hydraulic cement is Portland cement (CEM I). Calcium sulphate hemihydrate can refer either to alpha plaster or beta plaster. Alpha plaster has lower specific surface area compared to beta plaster, which results in lower water demand for equivalent workability.

The reactive binder mixture comprises from 10 wt.%, preferably 12 wt.%, more preferably 15 wt.%, or even 17 wt.%, to 40 wt.%, preferably 30 wt.%, more preferably 25 wt.%, or even 20 wt.%, of hydraulic cement.

The addition of calcium sulphate hemihydrate in the reactive binder mixture accelerates the setting time of the cementitious composition obtained from this reactive binder mixture. The use of the reactive binder mixture according to the invention in a cementitious article can thus mitigate or even prevent formation of thaumasite crystals while having a controlled setting time, for example tenths of seconds to tenths of minutes. The cementitious article also exhibits good water resistance. Additionally, cementitious articles manufactured according to the invention can have a reduced carbon footprint due to their composition, and as such can be more sustainable, low-carbon alternatives compared to existing cementitious articles.

The reactive binder composition comprises from 40 wt.%, preferably 45 wt.%, more preferably 50 wt.%, or even 52 wt.%, to 80 wt.%, preferably 75 wt.%, more preferably 70 wt.%, or even 65 wt.%, of calcium sulphate hemihydrate.

The reactive binder composition comprises from 1 wt.%, preferably 2 wt.%, more preferably 5 wt.%, or even 7 wt.%, to 35 wt.%, preferably 33 wt.%, more preferably 30 wt.%, of silica source material. The silica source material comprises typically at least 20 wt.%, preferably at least 50 wt.%, more preferably at least 70 wt.%, or even at least 90 wt.%, of alkali silicate material. In some particular embodiments, the silica source material may consist essentially of, or consist of, alkali silicate material. According to an optional characteristic of the invention, the silica source material can comprise a pozzolanic material. It may comprise typically up to 80 wt.%, for example from 5 to 50 wt.% or 10 to 30 wt.% of pozzolanic material. The pozzolanic material can be selected from silica fumes, fly ash, metakaolin or mixtures thereof.

In some embodiments, the reactive binder mixture comprises at least 15 to 25 wt.% hydraulic cement, 50 to 70 wt.% calcium sulphate hemihydrate, and 7 to 35 wt.% silica source material.

According to other embodiments, the reactive binder mixture comprises at least 17 to 20 wt.% hydraulic cement, 52 to 65 wt.% calcium sulphate hemihydrate, and 10 to 30 wt.% silica source material.

The content of hydraulic cement, calcium sulphate hemihydrate and silica source material generally sums up to at least 80 wt.%, preferably at least 90 wt.%, more preferably at least 95 wt.%, even more preferably at least 99 wt.% of the total reactive binder mixture based on dry matter. In some other embodiments, the reactive binder mixture consists essentially of, or consists of, hydraulic cement, calcium sulphate hemihydrate and alkali silicate material, i.e. the composition does not comprise further components acting as reactive binders.

The invention also relates to a cementitious composition comprising, based on the total dry matter, 15 to 90 wt%, preferably 20 to 70 wt.%, more preferably 25 to 50 wt/%, of the reactive binder mixture as defined above and 10 to 85 wt.%, preferably 30 to 80 wt.%, more preferably 50 to 75 wt.%, of fillers. The cementitious composition can be a dry blend or an aqueous slurry. When the cementitious composition is an aqueous slurry it comprises typically a water-to-binder weight ratio ranging from 0.2 to 1.

Fillers may be selected from aggregates such as sand, limestone or other calcium carbonates, greywacke, basalt, dolomite, volcanic rock, slate, and/or recycled material from the production of the cementitious boards, or mixtures thereof, lightweight fillers such as expanded clays, expanded perlites, expanded shale, polystyrene beads, expanded glass beads, or mixtures thereof, and fibers such as glass fibers, synthetic fibers, natural fibers, and mixtures thereof.

Such fillers are intended to be effectively inert materials. Such effectively inert materials do not tend to significantly affect the setting characteristics of the reactive binder mixture. In particular, fillers do not create any significant chemical reaction with the reactive binder mixture.

Admixtures may also be added to the cementitious composition, for instance to alter or enhance the properties of this reactive binder mixture and/or to improve the workability of the cementitious composition and/or to improve the properties of the cementitious article. There are several types of admixtures, among which are retarders, set and hardening accelerators, plasticisers, foaming agents, bonding agents, shrinkage reducers, anti-foam agents, pigments, hydrophobic agents and corrosion inhibitors.

Retarders are components which can significantly delay the setting time of the reactive binder mixture. Retarders can be chosen from citric acid, tartaric acid, gluconates, phosphates, polyacrylates, polymethylacrylates, sugars and protein-based agents. On the contrary, accelerators can speed up the mechanical properties development of the reactive binder mixture. Accelerators can be chosen from soluble salts such as potassium sulphate or ammonium sulphate, mineral acids, organic acids, chlorides, nitrates, sulphates and bisulphates, or gypsum seeds as nucleating agents.

Plasticisers, or superplasticisers, are used to increase the binder content without affecting the workability, or, to increase the fluidity for a same solid content. Plasticisers or superplasticisers used in the invention may be selected from lignosulphonates or synthetic naphthalene sulphonates, polycarboxylate ethers or phosphonated polyarylethers.

Other admixtures may include foaming agents, which are used to produce air bubbles in the cementitious board. Foaming agents can be made from hydrolysed proteins, synthetic surfactants and alkyl ether sulphonates combined with water and air.

The present invention further relates to a cementitious article, in particular a cementitious board, cementitious prefabricated elements or mortars including flooring products, obtained from the curing of the cementitious composition as defined above. The cementitious article is preferably a cementitious board, comprising a lightweight core between a first covering layer and a second covering layer, wherein the core results from the curing of an aqueous cementitious composition as defined above.

The reactive binder mixture is therefore mixed with fillers to make cementitious boards, which in the present invention refer to construction boards obtained from cementitious compositions. The expression "lightweight core" refers to a core having a weight of 5 kg/m² to 17 kg/m² and/or a specific gravity of 0.4 to 1.36.

The invention also covers a process for manufacturing a cementitious article as previously described, in particular a cementitious board, comprising a step of mixing hydraulic cement, calcium sulphate hemihydrate and the silica source material to form a reactive binder mixture as previously described, a step wherein an aqueous cementitious composition is formed by adding water to the reactive binder mixture, and a step of forming the cementitious article using the aqueous cementitious composition. The forming step may include casting the aqueous cementitious composition into moulds or continuously pouring and extruding the aqueous cementitious composition.

In some embodiments, the process of the invention is a process for manufacturing a cementitious board as previously described, comprising a step of mixing hydraulic cement, calcium sulphate hemihydrate and the silica source material to form a reactive binder mixture as previously described, a step wherein the aqueous cementitious composition is formed by adding fillers and water to the reactive binder mixture, and a step wherein the aqueous cementitious composition is poured onto a conveyor, in which the first covering layer carried by the conveyor is covered with the aqueous cementitious composition.

In some embodiments, the process further comprises a step in which fillers are added to the aqueous cementitious composition.

The process may also comprise a step wherein the first covering layer covered in aqueous cementitious composition is extruded, cut and cured.

The present invention will now be described more fully hereinafter with reference to the accompanying drawings, in which some, but not all embodiments of the invention are shown. Indeed, the invention may be embodied in many different forms and should not be construed as limited to the embodiments set forth herein; on the contrary, these embodiments are provided so that this disclosure will satisfy applicable legal requirements.

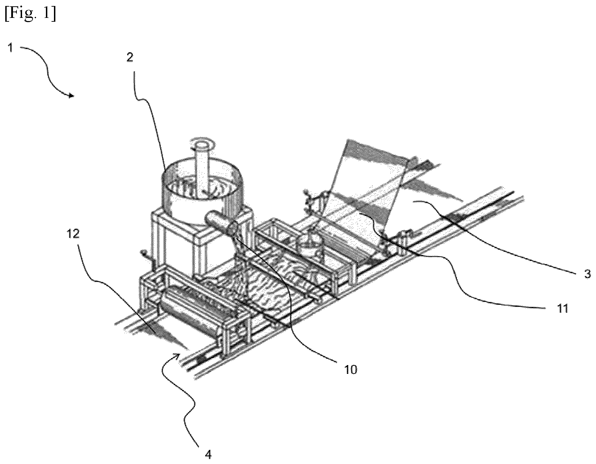

[Fig. 1] is a schematic view of a cementitious board manufacturing process;

Like numbers refer to like elements throughout drawings.

As shown in figure 1, the cementitious board manufacturing process 1 which is used to manufacture cementitious boards 4 according to the invention is a continuous process. Such manufacturing process comprises at least a tank 2, in which components for an aqueous cementitious composition 10 are continuously mixed to form a cementitious slurry. The components of such aqueous cementitious composition 10 will be described hereinafter.

The aqueous cementitious composition 10 is poured on a conveyor 3, this conveyor 3 carrying a first covering layer 11. This first covering layer 11 is thus covered with the aqueous cementitious composition 10, the latter forming a lightweight core of the cementitious boards 4. In some embodiments, the conveyor 3 comprises vibrating components which help spread out the aqueous cementitious composition 10 with its vibrations. The cementitious board 4 may also comprise a second covering layer 12, which is to be placed on top of the aqueous cementitious composition 10. Once the aqueous cementitious composition 10 has been poured on the first covering layer 11, they may go through an extruder and a cutting station, not shown on figure 1, where they are cut into cementitious boards 4 of desired dimensions. The cementitious boards 4 can then be stored for a curing process when necessary.

The components mixed in the tank 2 to form the aqueous cementitious composition 10 are a reactive binder mixture, water, and in some embodiments fillers.

The reactive binder mixture can make up 15 to 90 wt.% of the components of the aqueous cementitious composition while the fillers make up 10 to 85 wt. %. These percentages are based on the solid weight (wt.) ratio between the component and the total dry matter.

The fillers can be chosen from aggregates such as sand or calcium carbonate, lightweight fillers such as expanded clay or hydrophobic expanded perlite, and fibers such as glass fibers, synthetic fibers or natural fibers. These fillers are effectively inert materials, which do not significantly react with the reactive binder mixture. The aqueous cementitious composition may also comprise admixtures, e.g., retarders, accelerators, plasticisers or foaming agents. Such admixtures can be used to alter or enhance the properties of the reactive binder mixture and to improve the quality of the cementitious board 4.

The invention will be illustrated by the following non-limiting example.

Samples were prepared from an aqueous cementitious composition comprising, based on total dry weight, 32 wt.% of a reactive binder (comprising hydraulic cement, calcium sulphate hemihydrate and silica source material), 68 wt.% of fillers (comprising calcium carbonate and sand), 0.3 wt.% of plasticizer and 0.005 wt.% of retarder. Sample I1, according to the invention comprises sodium silicate, whereas samples C1 and C2, which are comparative examples, comprise pozzolanic material consisting of two different silica fumes: a densified (aggregated) silica fume powder SF1, and an undensified silica fume powder SF2. As a reference, a sample comprising no silica source material was also prepared. The cementitious compositions are summarized in table 1.

**[Table 1]**

| **Sample** | | **I1** | **C1** | **C2** | **Ref.** |
|---|---|---|---|---|---|
| **Reactive binder** | | **32%** | | | **27%** |
| | hydraulic cement | 21.9% | | | 25.9% |
| | calcium sulphate hemihydrate | 62.5% | | | 74.1% |
| | silica source material | 15.6% Sodium silicate | 15.6% SF1 | 15.6% SF2 | - |
| **Fillers** | | **67.7%** | | | **73%** |
| | Calcium carbonate | 26.5% | | | 31.5% |
| | Sand | 73.5% | | | 68.5% |
| **Plasticizer** | | **0.3%** | | | |
| **Retarder** | | **0.005%** | | | |

The samples were obtained by mixing the components with water, with a water-to-binder weight ratio of approximatively 0.625, and pouring the aqueous compositions thus obtained into moulds that consisted of three cavities measuring 4 x 4 x 16 cm³ each, and then covered with plastic to preserve humidity. The samples, each thus measuring approximately 4 x 4 x 16 cm³, were demoulded after 24 hours and placed in sealed bags at room temperature (3 samples of identical formulation in each sealed bag). After curing for a further 6 days, each board sample was removed from the sealed bags and submitted to an immersion test consisting in placing the samples in water at approximately 5°C for up to 300 days with no water renewal. The dimensional variations of the samples were measured approximately every 7 days. Table 2 shows the dimensional variations in mm/m of samples over time.

**[Table 2]**

| **Period of immersion (days)** | **7** | **14** | **21** | **56** | **63** | **300** |
|---|---|---|---|---|---|---|
| **Ref.** | 0.2 - 0.3 | 0.2 - 0.3 | 0.2 - 0.3 | 3.5 - 4.0 | 6.5 - 7 | n.m. |
| **I1 (sodium silicate)** | < 0.2 | < 0.2 | < 0.2 | < 0.2 | < 0.2 | < 0.2 |
| **C1 (SF1)** | < 0.2 | 0.2 - 0.3 | 0.2 - 0.3 | 0.3 - 0.4 | 0.3 - 0.4 | 0.4 - 0.5 |
| **C2 (SF2)** | < 0.2 | < 0.2 | < 0.2 | < 0.2 | < 0.2 | < 0.2 |

| | | | | | | |
|---|---|---|---|---|---|---|
| n.m.: non-measurable | | | | | | |

Unsurprisingly, the reference sample, made from a reactive binder composition comprising only hydraulic cement and calcium sulphate hemihydrate, showed signs of swelling after only 7 days immersion, then reached very significant levels of swelling and cracking after only 56 days immersion and started to disintegrate and break apart not long after 63 days immersion. On the contrary, sample I1 according to the invention showed nearly no dimensional changes even after 300 days of immersion. Comparatively, sample C2 comprising undensified silica fume showed similar results. On the other hand, Sample C1 comprising densified silica fume showed increasing swelling from 14 days and up to 300 days of immersion.

Board sample I1 according to the invention thus exhibits similar or enhanced stability under humid conditions compared to board samples C1 and C2 made with conventional pozzolanic materials.

The present invention thus offers a reactive binder mixture for cementitious article, the components of such reactive binder mixture being selected for the article to exhibit good water resistance.

Any modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A reactive binder mixture comprising, based on the total dry matter:
10 to 40 wt. % hydraulic cement
40 to 80 wt. % calcium sulphate hemihydrate, and
1 to 35 wt. % silica source material,
wherein said silica source material comprises an alkali silicate material.

2. The reactive binder mixture according to claim 1, wherein the silica source material comprises at least 20 wt%, preferable at least 50 wt.%, more preferably at least 70 wt.%, or even at least 90 wt.%, of alkali silicate material.

3. The reactive binder mixture according to claim 1 or 2, wherein the alkali silicate material is selected from sodium silicates, potassium silicates, lithium silicates, caesium silicates or mixtures thereof, preferably from sodium or potassium silicates.

4. The reactive binder mixture according to any one of claims 1 to 3, wherein the alkali silicate material has a modulus equal to or higher than 2.5, preferably higher than 3, the modulus corresponding to the molar ratio SiO2/M2O, with M being an alkaline element.

5. The reactive binder mixture according to any one of claims 1 to 4, comprising, based on the total dry matter:
15 to 25 wt. % hydraulic cement,
50 to 70 wt. % calcium sulphate hemihydrate, and
7 to 35 wt. % silica source material.

6. The reactive binder mixture according to any one of claims 1 to 5, comprising, based on the total dry matter:
17 to 20 wt. % hydraulic cement,
52 to 65 wt. % calcium sulphate hemihydrate, and
10 to 30 wt. % silica source material.

7. The reactive binder mixture according to any one of claims 1 to 6, wherein the silica source material comprises a pozzolanic material, preferably selected from selected from silica fumes, fly ash, metakaolin or mixtures thereof.

8. A cementitious article obtained from the curing of a cementitious composition comprising, based on the total dry matter, 15 to 90 wt.% of the reactive binder mixture as defined in any one of claims 1 to 7 and 10 to 85 wt.%, of fillers.

9. The cementitious article according to claim 8, wherein said cementitious article is a cementitious board.

10. The cementitious article according to claim 8 or 9, wherein said cementitious article is a cementitious board (4), comprising a lightweight core between a first covering layer (11) and a second covering layer (12), wherein the core results from the curing of an aqueous cementitious composition (10) comprising, based on the total dry matter, 15 to 90 wt. % of the reactive binder mixture according to any one of claims 1 to 7 and 10 to 85 wt. % of fillers, and has a weight of 5 kg/m² to 17 kg/m² and/or a specific gravity of 0.4 to 1.36.

11. A process for manufacturing a cementitious article as defined in any one of claims 8 to 10, in particular a cementitious board as defined in claim 9 or 10, comprising a step of mixing hydraulic cement, calcium sulphate hemihydrate and the silica source material to form a reactive binder mixture according to any one of claims 1 to 7, a step wherein an aqueous cementitious composition is formed by adding water to the reactive binder mixture, and a step of forming the cementitious article using the aqueous cementitious composition.

12. The process according to claim 11, where the step of forming the cementitious article comprises pouring the aqueous cementitious composition into moulds.

13. The process (1) according to claim 11 for manufacturing a cementitious board (4) according to claim 10, comprising a step of mixing hydraulic cement, calcium sulphate hemihydrate and the silica source material to form a reactive binder mixture according to any one of claims 1 to 7, a step wherein an aqueous cementitious composition (10) is formed by adding water to the reactive binder mixture, and a step wherein the aqueous cementitious composition (10) is poured onto a conveyor (3), in which the first covering layer (11) carried by the conveyor (3) is covered with the aqueous cementitious composition (10).

## Patentansprüche

1. Reaktive Bindemittelmischung, umfassend, bezogen auf die Gesamttrockenmasse:
zu 10 bis 40 Gew.-% hydraulischen Zement
zu 40 bis 80 Gew.-% Calciumsulfathalbhydrat, und
zu 1 bis 35 Gew.-% Siliciumdioxidausgangsmaterial,
wobei das Siliciumdioxid-Ausgangsmaterial ein Alkalisilikatmaterial umfasst.

2. Reaktive Bindemittelmischung nach Anspruch 1, wobei das Siliciumdioxidausgangsmaterial mindestens zu 20 Gew.-%, vorzugsweise mindestens zu 50 Gew.-%, mehr bevorzugt mindestens zu 70 Gew.-% oder sogar mindestens zu 90 Gew.-% Alkalisilikatmaterial umfasst.

3. Reaktive Bindemittelmischung nach Anspruch 1 oder 2, wobei das Alkalisilikatmaterial aus Natriumsilikaten, Kaliumsilikaten, Lithiumsilikaten, Cäsiumsilikaten oder Mischungen davon, vorzugsweise aus Natrium- oder Kaliumsilikaten ausgewählt ist.

4. Reaktive Bindemittelmischung nach einem der Ansprüche 1 bis 3, wobei das Alkalisilikatmaterial einen Modul von gleich oder höher als 2,5, vorzugsweise höher als 3 aufweist, wobei der Modul dem Molverhältnis SiO2/M2O entspricht, wobei M ein alkalisches Element ist.

5. Reaktive Bindemittelmischung nach einem der Ansprüche 1 bis 4, umfassend, bezogen auf die Gesamttrockenmasse:
zu 15 bis 25 Gew.-% hydraulischen Zement,
zu 50 bis 70 Gew.-% Calciumsulfathalbhydrat, und
zu 7 bis 35 Gew.-% Siliciumdioxidausgangsmaterial.

6. Reaktive Bindemittelmischung nach einem der Ansprüche 1 bis 5, umfassend, bezogen auf die Gesamttrockenmasse:
zu 17 bis 20 Gew.-% hydraulischen Zement,
zu 52 bis 65 Gew.-% Calciumsulfathalbhydrat, und
zu 10 bis 30 Gew.-% Siliciumdioxidausgangsmaterial.

7. Reaktive Bindemittelmischung nach einem der Ansprüche 1 bis 6, wobei das Siliciumdioxidausgangsmaterial ein Puzzolanmaterial umfasst, das vorzugsweise aus Siliciumdioxiddämpfen, Flugasche, Metakaolin oder Mischungen davon ausgewählt ist.

8. Zementartiger Gegenstand, der aus dem Aushärten einer zementartigen Zusammensetzung erhalten wird, umfassend, bezogen auf die Gesamttrockenmasse, zu 15 bis 90 Gew.-% die reaktive Bindemittelmischung nach einem der Ansprüche 1 bis 7 und zu 10 bis 85 Gew.-% Füllstoffe.

9. Zementartiger Gegenstand nach Anspruch 8, wobei der zementartige Gegenstand eine zementartige Platte ist.

10. Zementartiger Gegenstand nach Anspruch 8 oder 9, wobei der zementartige Gegenstand eine zementartige Platte (4) ist, umfassend einen leichten Kern zwischen einer ersten Deckschicht (11) und einer zweiten Deckschicht (12), wobei der Kern aus dem Aushärten einer wässrigen zementartigen Zusammensetzung (10) resultiert, umfassend, bezogen auf die Gesamttrockenmasse, zu 15 bis 90 Gew.-% die reaktive Bindemittelmischung nach einem der Ansprüche 1 bis 7 und zu 10 bis 85 Gew.-% Füllstoffe, und ein Gewicht von 5 kg/m² bis 17 kg/m² und/oder eine relative Dichte von 0,4 bis 1,36 aufweist.

11. Verfahren zum Herstellen eines zementartigen Gegenstands nach einem der Ansprüche 8 bis 10, insbesondere einer zementartigen Platte nach Anspruch 9 oder 10, umfassend einen Schritt eines Mischens von hydraulischem Zement, Calciumsulfathalbhydrat und dem Siliciumdioxidausgangsmaterial, um eine reaktive Bindemittelmischung nach einem der Ansprüche 1 bis 7 auszubilden, einen Schritt, wobei eine wässrige zementartige Zusammensetzung durch Zugeben von Wasser zu der reaktiven Bindemittelmischung ausgebildet wird, und einen Schritt des Ausbildens des zementartigen Gegenstands unter Verwendung der wässrigen zementartigen Zusammensetzung.

12. Verfahren nach Anspruch 11, wobei der Schritt des Ausbildens des zementartigen Gegenstands ein Gießen der wässrigen zementartigen Zusammensetzung in Formen umfasst.

13. Verfahren (1) nach Anspruch 11 zum Herstellen einer zementartigen Platte (4) nach Anspruch 10, umfassend einen Schritt des Mischens von hydraulischem Zement, Calciumsulfathalbhydrat und dem Siliciumdioxidausgangsmaterial, um eine reaktive Bindemittelmischung nach einem der Ansprüche 1 bis 7 auszubilden, einen Schritt, wobei eine wässrige zementartige Zusammensetzung (10) durch Zugeben von Wasser zu der reaktiven Bindemittelmischung ausgebildet wird, und einen Schritt, wobei die wässrige zementartige Zusammensetzung (10) auf ein Förderband (3) gegossen wird, in dem die erste Deckschicht (11), die durch das Förderband (3) getragen wird, mit der wässrigen zementartigen Zusammensetzung (10) bedeckt wird.

## Revendications

1. Mélange de liant réactif comprenant, sur la base de la matière sèche totale :
de 10 à 40 % en poids de ciment hydraulique
de 40 à 80 % en poids de sulfate de calcium hémihydraté, et
de 1 à 35 % en poids de matériau source de silice,
dans lequel ledit matériau source de silice comprend un matériau de silicate alcalin.

2. Mélange de liant réactif selon la revendication 1, dans lequel le matériau source de silice comprend au moins 20 % en poids, de préférence au moins 50 % en poids, plus préférablement au moins 70 % en poids, ou même au moins 90 % en poids, de matériau de silicate alcalin.

3. Mélange de liant réactif selon la revendication 1 ou 2, dans lequel le matériau de silicate alcalin est choisi parmi les silicates de sodium, les silicates de potassium, les silicates de lithium, les silicates de césium ou leurs mélanges, de préférence parmi les silicates de sodium ou de potassium.

4. Mélange de liant réactif selon l'une quelconque des revendications 1 à 3, dans lequel le matériau silicate alcalin a un module égal ou supérieur à 2,5, de préférence supérieur à 3, le module correspondant au rapport molaire SiO₂/M₂O, M étant un élément alcalin.

5. Mélange de liant réactif selon l'une quelconque des revendications 1 à 4, comprenant, sur la base de la matière sèche totale :
de 15 à 25 % en poids de ciment hydraulique,
de 50 à 70 % en poids de sulfate de calcium hémihydraté, et
de 7 à 35 % en poids de matériau source de silice.

6. Mélange de liant réactif selon l'une quelconque des revendications 1 à 5, comprenant, sur la base de la matière sèche totale :
de 17 à 20 % en poids de ciment hydraulique,
de 52 à 65 % en poids de sulfate de calcium hémihydraté, et
de 10 à 30 % en poids de matériau source de silice.

7. Mélange de liant réactif selon l'une quelconque des revendications 1 à 6, dans lequel le matériau source de silice comprend un matériau pouzzolanique, de préférence choisi parmi les fumées de silice, les cendres volantes, le métakaolin ou leurs mélanges.

8. Article cimentaire obtenu par le durcissement d'une composition cimentaire comprenant, sur la base de la matière sèche totale, de 15 à 90 % en poids du mélange de liant réactif tel que défini dans l'une quelconque des revendications 1 à 7 et de 10 à 85 % en poids de charges.

9. Article cimentaire selon la revendication 8, dans lequel ledit article cimentaire est un panneau cimentaire.

10. Article cimentaire selon la revendication 8 ou 9, dans lequel ledit article cimentaire est un panneau cimentaire (4), comprenant un noyau léger entre une première couche de revêtement (11) et une seconde couche de revêtement (12), dans lequel le noyau résulte du durcissement d'une composition cimentaire aqueuse (10) comprenant, sur la base de la matière sèche totale, de 15 à 90 % en poids de mélange de liant réactif selon l'une quelconque des revendications 1 à 7 et 10 à 85 % en poids de charges et a un poids de 5 kg/m² à 17 kg/m² et/ou une densité de 0,4 à 1,36.

11. Procédé de fabrication d'un article cimentaire selon l'une quelconque des revendications 8 à 10, en particulier d'un panneau cimentaire selon la revendication 9 ou 10, comprenant une étape de mélange de ciment hydraulique, du sulfate de calcium hémihydraté et du matériau source de silice pour former un mélange de liant réactif selon l'une quelconque des revendications 1 à 7, une étape où une composition cimentaire aqueuse est formée par ajout d'eau au mélange de liant réactif, et une étape de formation de l'article cimentaire l'aide de la composition cimentaire aqueuse.

12. Procédé selon la revendication 11, dans lequel l'étape de formation de l'article cimentaire consiste à verser la composition cimentaire aqueuse dans des moules.

13. Procédé (1) selon la revendication 11 pour la fabrication d'un panneau cimentaire (4) selon la revendication 10, comprenant une étape de mélange du ciment hydraulique, du sulfate de calcium hémihydraté et du matériau source de silice pour former un mélange de liant réactif selon l'une quelconque des revendications 1 à 7, une étape où une composition cimentaire aqueuse (10) est formée par ajout d'eau au mélange de liant réactif, et une étape où la composition cimentaire aqueuse (10) est versée sur un convoyeur (3), dans lequel la première couche de revêtement (11) transportée par le convoyeur (3) est recouverte de la composition cimentaire aqueuse (10).
